# EUROPÄISCHE PATENTSCHRIFT

(11) **EP 4 153 884 B1**
(45) Veröffentlichungstag und Bekanntmachung des Hinweises auf die Patenterteilung: **22.05.2024**
(21) Anmeldenummer: 21730802.2
(22) Anmeldetag: 17.05.2021
(51) Int. Cl.: F16F 9/52, F16F 9/02

(54) **GASDRUCKFEDER UND HERSTELLUNGSVERFAHREN DER GASDRUCKFEDER**
GAS PRESSURE SPRING AND METHOD FOR PRODUCING THE GAS PRESSURE SPRING
RESSORT À GAZ ET PROCÉDÉ DE PRODUCTION D'UN RESSORT À GAZ

(30) Priorität: 20.05.2020 DE 102020113750
(43) Veröffentlichungstag der Anmeldung: 29.03.2023
(73) Patentinhaber: STABILUS GmbH, 56070 Koblenz (DE)
(72) Erfinder: PROBST, Ulrich, 56204 Hilscheid (DE); REISER, Alexander, 56294 Münstermaifeld (DE)
(74) Vertreter: Bernsmann, Falk
(86) Internationale Anmeldenummer: PCT/EP2021/063018
(87) Internationale Veröffentlichungsnummer: WO 2021/233842

(56) Entgegenhaltungen:
- JP-A- H04 210 136
- JP-A- 2007 263 324

## Beschreibung

### Technisches Gebiet

Die Erfindung betrifft eine Gasdruckfeder, umfassend
a) einen Arbeitszylinder, der zusammen mit einem gegenüber dem Arbeitszylinder verschieblich gelagerten Ausgleichskolben einen mit einem Arbeitsmedium gefüllten Arbeitsraum umschließt,
b) eine Arbeitsstange, die durch eine Öffnung des Arbeitszylinders entlang einer Hubachse verschiebbar gelagert in den Arbeitsraum hineinragt,
c) einen an der Arbeitsstange befestigten und in dem Arbeitsraum entlang der Hubachse verschieblich gelagerten Arbeitskolben,
d) ein in einem Ausgleichsraum angeordnetes, sich bei Temperaturerhöhung ausdehnendes Ausgleichsmedium,
e) wobei der Ausgleichskolben von dem Druck des Arbeitsmediums und dem Druck des Ausgleichsmediums in einem das Volumen des Arbeitsraums vergrößernden Sinne beaufschlagt ist. Die Erfindung betrifft außerdem ein Verfahren zur Herstellung einer derartigen Gasdruckfeder.

Gasdruckfedern sind typischer Weise mit Stickstoff gefüllt, wodurch die resultierenden Federkräfte der Gasdruckfedern Temperaturschwankungen unterliegen, d.h. das enthaltene Gas dehnt sich bei steigender Temperatur T aus und zieht sich bei sinkender Temperatur T zusammen bzw. bei konstantem Volumen V steigt bzw. sinkt der Gasdruck p (bei einem idealem Gas gilt: p*V = n*R*T). In manchen Anwendungen führt dies zu Problemen weshalb es von Vorteil wäre, diesen physikalischen Effekt ganz oder teilweise zu kompensieren.

Beispielsweise bei der Verwendung in einer Heckklappe eines Fahrzeugs führt die Temperaturabhängigkeit der Federkraft dazu, dass die Gasdruckfeder stärker als für die meisten Temperaturen nötig ausgestaltet sein muss, um auch bei niedrigen Temperaturen (z.B. bei -30 bis 0 C°) eine ausreichende Federkraft bereitzustellen (um z.B. die Heckklappe zuverlässig offenzuhalten). Dies erhöht aber im Mittel die Abnutzung der Gasdruckfeder, da sie meist bei mittleren Temperaturen (z.B. von 0° bis 25°C) betrieben wird. Gleichzeitig verringert sich bei manueller Bedienung auch der Bedienungskomfort bei höheren Temperaturen (z.B. über 25° C), da eine verhältnismäßig hohe Kraft notwendig ist, um die Gasdruckfeder wieder zu komprimieren (z. B. beim Schließen der Heckklappe). Bei automatischem Antrieb (z. B. selbstöffnende Heckklappe) ist ebenfalls eine höhere Antriebskraft notwendig, um die Federkraft bei hohen Temperaturen zu überwinden.

### Stand der Technik

Die EP 1 795 777 B1 beschreibt eine Gasdruckfeder, umfassend einen Arbeitszylinder, der zusammen mit einer Ausgleichskolbenanordnung einen mit einem Arbeitsmedium gefüllten Arbeitsraum umgrenzt. Eine Arbeitsstange ragt durch eine Öffnung des Arbeitszylinders verschiebbar in den Arbeitsraum hinein, wobei die Ausgleichskolbenanordnung von dem Druck des Arbeitsmediums und dem Druck eines in einem Ausgleichsraum vorgesehenen, sich bei Temperaturerhöhung ausdehnenden Ausgleichsmediums in einem das Volumen des Arbeitsraums vergrößernden Sinne beaufschlagt ist. Ein Ausgleichszylinder, der den Arbeitszylinder mit Abstand umschließt, erstreckt sich mit seinem vom Arbeitsstangenaustrittsende der Gasdruckfeder entfernten Ende über den Arbeitszylinder hinaus und ist an diesem Ende geschlossen. Der Ausgleichsraum wird im Wesentlichen von einem ringförmigen Raum zwischen Arbeitszylinder und Ausgleichszylinder gebildet. Das Ausgleichsmedium reduziert also in einem gewissen Maß die Temperaturabhängigkeit der Gasdruckfederkraft, indem es das dem Arbeitsmedium zur Verfügung stehende Volumen temperaturabhängig anpasst.

Zur Zeit werden zur Behebung des Problems im Stand der Technik mehrere nicht optimale Lösungen angeboten:
1. Temperaturkompensation durch Freischalten eines zusätzlichen Volumens bei Kälte, beispielsweise über ein temperaturabhängiges Ventil,
2. die Verwendung von Federbeinen, also insbesondere einer Kombination aus Gasdruckfeder und mechanischer Feder, sowie
3. die in EP1795777B1 beschriebene Verwendung eines Ausgleichmediums zur Reduktion der Temperaturabhängigkeit.

Die 1. Option hat einen begrenzten Temperatur-Kompensationsgrad und die Baulänge der Geräte nimmt sehr stark zu.

Die 2. Option hat den Nachteil, dass ausreichend dimensionierte Federbeine im Verhältnis sehr teuer in der Herstellung sind und eine ungünstige Federkennung aufweisen. Außerdem kann die Temperaturabhängigkeit nicht vollständig aufgehoben werden.

Die 3. Option ist in den bekannten Varianten sehr aufwändig und vor allem in Hinblick auf die Montage nicht kostengünstig umzusetzen. So kann zurzeit diese Ausführung nur auf Handstraßen (also zum großen Teil manuell) gefertigt werden, eine Herstellung auf halb- bzw. vollautomatischen Maschinen erscheint nicht möglich.

Die JP H04 210136A offenbart ebenfalls eine Gasdruckfeder und wird als naheliegendster Stand der Technik betrachtet.

### Technische Aufgabe

Die Aufgabe der Erfindung ist es, eine Gasdruckfeder der eingangs genannten Art bereitzustellen, die eine möglichst geringe Temperaturabhängigkeit der Federkraft aufweist und gleichzeitig eine möglichst einfache Konstruktion aufweist.

### Technische Lösung

Der Gegenstand der vorliegenden Erfindung stellt eine Gasdruckfeder gemäß Anspruch 1 bereit, die die technische Aufgabe löst. Ebenso wird die Aufgabe durch ein Verfahren zur Herstellung einer derartigen Gasdruckfeder gemäß Anspruch 3 gelöst. Vorteilhafte Ausgestaltungen ergeben sich aus den abhängigen Ansprüchen.

Die zumindest teilweise Anordnung des Ausgleichsraums in der Arbeitsstange hat den Vorteil, dass die Konstruktion einer Gasdruckfeder mit Ausgleichmedium zur Temperaturkompensation deutlich weniger Bauraum benötigt. Um Raum für das Ausgleichsmedium zu schaffen kann beispielsweise der Radius der Arbeitsstange etwas vergrößert werden, um bei gleicher Stabilität einen Hohlraum zu schaffen. Das Ausgleichsmedium kann also prinzipiell ohne oder nur mit einer geringen Erhöhung der Baulänge untergebracht werden. Dies ist wichtig, da für viele Anwendungen Beschränkungen für die mögliche Baulänge der Gasdruckfeder bestehen (z. B. im Automobilbereich bei Heckklappen).

Gleichzeitig kann das Ausgleichsmedium zusammen mit der Arbeitsstange installiert werden und erleichtert somit den Zusammenbau. Im Gegensatz dazu wurde z. B. durch die in EP1795777B1 beschriebene ringförmige Anordnung des Dehnstoffs die Konstruktion deutlich verkompliziert.

Vorzugsweise ist der Ausgleichsraum dicht für das Ausgleichsmedium zumindest teilweise von der Arbeitsstange umschlossen.

Insbesondere ist der Ausgleichsraum druckstabil für das Ausgleichsmedium zumindest teilweise von der Arbeitsstange umschlossen. So kann die Arbeitsstange den variablen Drücken des Ausgleichsmediums und des Arbeitsmediums standhalten können.

Im Vergleich zur Verwendung eines Federbeins (Option 2) können auch die Herstellkosten reduziert werden, da keine teure mechanische Feder notwendig ist. Gleichzeitig ist auch das Gewicht in der Regel geringer als bei der Verwendung von Federbeinen.

Die erfindungsgemäße Lösung weist auch eine bessere Funktionalität auf als ein temperaturabhängiges Ventil (Option 1) d.h. einen höheren Kompensationsgrad der Temperaturabhängigkeit.

Die Montage der Gasdruckfeder wird im Vergleich zu bekannten Modellen mit Ausgleichmedium vereinfacht und sogar eine automatische Montage ist möglich. Ein nachteiliger Einfluss auf die Lebensdauer ist nicht zu erwartet, wobei eine bessere Temperaturkompensation tendenziell eine besser dimensionierte Federkraft ermöglicht, sodass auch der Verschleiß im Mittel reduziert werden kann.

### Beschreibung der Ausführungsarten

Erfindungsgemäß umfasst die Gasdruckfeder ein an dem Arbeitskolben befestigtes und in dem Arbeitszylinder entlang der Hubachse verschieblich gelagertes Ausgleichsgefäß mit einem Innenraum, wobei der Ausgleichskolben den Innenraum in einen mit dem Arbeitsraum für das Arbeitsmedium leitend verbundenen inneren Arbeitsraum und einen gegenüber dem Arbeitsraum abgedichteten Rückstellraum teilt. Diese Ausführungsform erlaubt eine einfache Montage, da das Ausgleichsgefäß am Arbeitskolben vormontiert werden kann und sich dann in einem Schritt zusammen mit dem Arbeitskolben in den Arbeitszylinder einbauen lässt. Die übrigen Montageschritte können im Vergleich zu Gasdruckfedern ohne Ausgleichsmechanismus im Wesentlichen gleich bleiben.

In einer Ausführungsform umfasst die Arbeitsstange einen durch den Druck des Ausgleichsmediums aus der Arbeitsstange austreibbaren Stößel, und der Stößel beaufschlagt den Ausgleichskolben mit Druck des Ausgleichsmediums in einem das Volumen des inneren Arbeitsraums vergrößernden Sinne. Die Verwendung des Stößels erlaubt eine kompaktere Anordnung des Ausgleichsmediums, da auch eine verhältnismäßig geringe Volumenvergrößerung des Ausgleichsmediums einen relativ großen axialen Hub des Stößels ermöglicht. Damit muss die Volumenveränderung des Arbeitsraumes nicht durch die Volumenveränderung des Ausgleichsmediums selbst erreicht werden, sondern diese kann durch die Relativbewegung des Stößels und des Arbeitsraums erreicht werden.

Vorzugsweise ist das Ausgleichsmedium ein Dehnstoff, bevorzugt ein Dehnwachs, ein Öl oder ein Zweiphasen-Medium, wobei das Ausgleichsmedium insbesondere so wie in EP 1 795 777 B1 beschrieben ausgestaltet sein kann, woraus sich die dort genannten Vorteile ergeben.

Erfindungsgemäß umfasst die Gasdruckfeder ein in dem Rückstellraum angeordnetes Rückstellmedium, wobei der Ausgleichskolben von dem Rückstellmedium in einem das Volumen des Arbeitsraums, bevorzugt des inneren Arbeitsraums, verkleinernden Sinne beaufschlagt ist. Dadurch kann möglichst einfach sichergestellt werden, dass sich bei einem Zusammenziehen des Ausgleichsmediums bei sinkender Temperatur auch der Ausgleichskolben wieder in die Ursprungslage zurückbewegt, also ein reversibler Betrieb sichergestellt ist. Mit der Volumenreduktion des Ausgleichsmediums wird dann durch das Rückstellmedium für eine entsprechende Volumenreduktion des Ausgleichsraums gesorgt.

Erfindungsgemäß ist das Rückstellmedium das gasförmige Arbeitsmedium.

Dies vereinfacht die Herstellung der Gasdruckfeder, da nur ein Medium bzw. Gas verwendet wird. Zusätzlich oder alternativ zu einem gasförmigen Rückstellmedium kann das Rückstellmedium eine mechanische Rückstellfeder in dem Rückstellraum umfassen.

Die erfindungsgemäße Aufgabe wird auch durch ein Verfahren zur Herstellung einer Gasdruckfeder nach einer der vorstehenden Ausführungsformen gelöst, wobei das Verfahren gekennzeichnet ist durch folgende Schritte:
a) Bereitstellen des Arbeitszylinders für die Gasdruckfeder,
b) Bereitstellen der Arbeitsstange mit einem Ausgleichsraum für die Gasdruckfeder,
c) Einfüllen des Ausgleichsmediums in Ausgleichsraum,
d) Einbauen der Arbeitsstange in den Arbeitszylinder. Das Ausgleichsmedium wird also im Gegensatz zum Stand der Technik zusammen mit den auch im Stand der Technik vorgesehenen "Hauptkomponenten" der Gasdruckfeder installiert. Die Montage der Gasdruckfeder wird mit diesem Verfahren im Vergleich zu bekannten Gasdruckfedern mit Ausgleichsmedium somit deutlich vereinfacht und sogar eine automatische Montage wird möglich.

In einer Ausführungsform umfasst das Verfahren folgende Schritte:
Befestigen des Stößels und/oder des Ausgleichsgefäßes an der Arbeitsstange vor dem Einbauen. Der Stößel und/oder das Ausgleichsgefäß sowie die Arbeitsstange können dann gemeinsam in den Arbeitszylinder eingesetzt werden, was die Konstruktion vereinfacht.

Erfindungsgemäß umfasst das Verfahren die Schritte:
a) Gleichzeitiges Befüllen des Arbeitsraums und des Rückstellraums, bevorzugt über ein Rückschlagventil zwischen Arbeitsraum und Rückstellraum, mit dem Arbeitsmedium und
b) Ablassen eines Teils des Arbeitsmediums aus dem Arbeitsraum nach dem Befüllen. Dadurch lässt sich die Montage der Gasdruckfeder beschleunigen und vereinfachen. Das Ablassen eines Teils des Arbeitsmediums vereinfacht die genaue Einstellung der Gasdruckfederkraft.

Die erfindungsgemäße Aufgabe wird auch durch Antriebssystem für eine Klappe gelöst, mit
a) einer Gasdruckfeder nach einer der vorstehenden Ausführungsformen zur Unterstützung der Klappe und
b) einem elektromechanischen Antrieb, beispielsweise einem Linearantrieb, insbesondere einem Spindelantrieb, zum Antrieb der Klappe.

Bei der Klappe kann es sich beispielsweise um eine Klappe eines Fahrzeugs, insbesondere um eine Motorhaube, eine Kofferraumklappe, eine Gepäckraumklappe oder eine Flügeltür, handeln.

Antriebssysteme für eine Klappe mit einer Gasdruckfeder zur Unterstützung der Klappe und einem elektromechanischen Antrieb zum Antrieb der Klappe sind im Stand der Technik bekannt. Bis auf die Verwendung einer erfindungsgemäßen anstelle einer gattungsgemäßen Gasdruckfeder kann das erfindungsgemäße Antriebssystem wie ein entsprechendes Antriebssystem aus dem Stand der Technik, beispielsweise aus DE 103 13 440 A1 oder DE 10 2008 045 903 A1, aufgebaut sein.

Die Gasdruckfeder des Antriebssystems dient dazu, die Klappe in einer beliebigen Stellung gegen die Schwerkraft zu halten, während der elektromechanische Antrieb dazu dient, die Klappe zu öffnen und zu schließen. Zusätzlich kann wie in DE 103 13 440 A1 und DE 10 2008 045 903 A1 eine manuelle Betätigung der Klappe vorgesehen sein.

Die Gasdruckfeder muss eine so hohe Federkraft aufweisen, dass sie Klappe auch bei niedrigen Umgebungstemperaturen halten kann. Da die Federkraft bei üblichen Gasdruckfedern mit steigender Temperatur steigt, führt dies dazu, dass bei hohen Temperaturen von dem elektromechanischen Antrieb oder einem Bediener eine sehr hohe Kraft aufgebracht werden muss, um die Klappe zu schließen. Daher muss das Antriebssystem einen sehr kraftvollen elektromechanischen Antrieb umfassen, der teuer ist, viel Bauraum beansprucht und im Betrieb viel Energie verbraucht. Außerdem kommt es zu einem hohen Verschleiß des elektromechanischen Antriebs und von anderen mit der Klappe mechanisch verbundenen Teilen, beispielsweise Scharnieren.

Im Stand der Technik werden diese Probleme durch Verwendung eines Federbeins anstelle der Gasdruckfeder umgangen (z.B. DE 10 2008 045 903 A1, Abs. [0021]). Ein Federbein hat zwar eine nahezu temperaturunabhängige Federkraft, ist aber größer, schwerer und teurer als eine Gasdruckfeder mit vergleichbarer Federkraft.

Durch die Verwendung einer erfindungsgemäßen, temperaturkompensierten Gasdruckfeder anstelle einer fachüblichen Gasdruckfeder wird somit ein besonders kostengünstiges, einfach herstellbares, langlebiges, kompaktes, energiesparendes und einfach zu bedienendes Antriebssystem für eine Klappe geschaffen.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt eine Ausführungsform einer erfindungsgemäßen Gasdruckfeder in einer ersten Stellung des Ausgleichskolbens.
Figur 2 zeigt die Ausführungsform der Fig. 1 in einer zweiten Stellung des Ausgleichskolbens.

### Fig.1 und 2

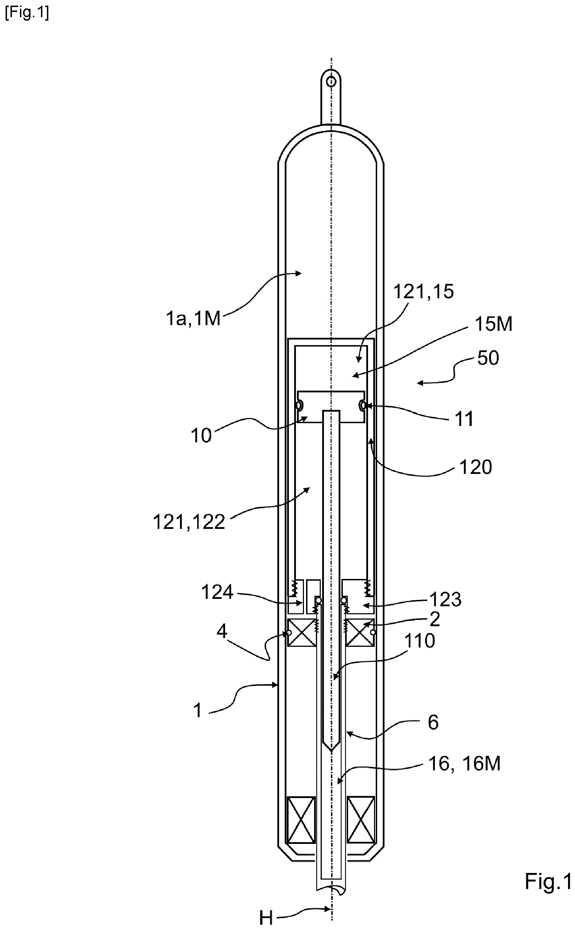

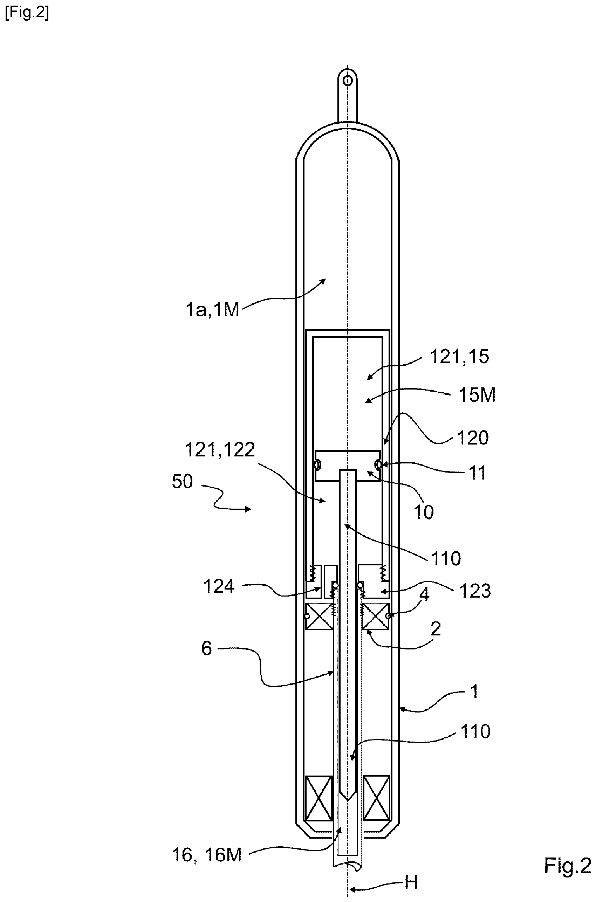

In Figur 1 und 2 ist eine erste Ausführungsform einer erfindungsgemäßen Gasdruckfeder 50 dargestellt, umfassend einen Arbeitszylinder 1, der zusammen mit einem gegenüber dem Arbeitszylinder 1 verschieblich gelagerten Ausgleichskolben 10 einen mit einem Arbeitsmedium 1M gefüllten Arbeitsraum 1a umschließt. Dabei ragt eine Arbeitsstange 6 durch eine Öffnung des Arbeitszylinders 1 entlang einer Hubachse H verschiebbar gelagert in den Arbeitsraum 1a hinein.

An der Arbeitsstange 6 ist ein Arbeitskolben 2 befestigt, der in dem Arbeitsraum 1a entlang der Hubachse H verschieblich gelagert ist. Der Arbeitskolben 2 weist eine ringförmige Dichtung 4 zur radialen Innenwand des Arbeitszylinders 1 auf (z. B. einen O-Ring), sodass bei einer Verschiebung des Arbeitskolbens 2 das Arbeitsmedium 1M den Arbeitskolben 2 nicht umströmen kann. Eine Verschiebung des Arbeitskolbens 2 führt also zunächst zu einer Druckänderung im Arbeitsraum 1a. Der Arbeitskolben 2 kann aber zum Druckausgleich eine (nicht dargestellte) Drosselbohrung aufweisen und / oder die radiale Innenwand des Arbeitszylinders 1 kann entlang der Hubachse H des Arbeitskolbens 2 eine Längsnut aufweisen.

Ein Ausgleichsmedium 16M ist in einem Ausgleichsraum 16 angeordnet und dehnt sich bei Temperaturerhöhung aus. Der Ausgleichskolben 10 ist von dem Druck des Arbeitsmediums 1M und dem Druck des Ausgleichsmediums 16M in einem das Volumen des Arbeitsraums 1a vergrößernden Sinne beaufschlagt.

Fig. 1 zeigt dabei eine Hochtemperatursituation während Fig. 2 eine Niedrigtemperatursituation zeigt.

Der Ausgleichsraum 16 ist hier teilweise von der Arbeitsstange 6 umschlossen. Insbesondere ist der Ausgleichsraum 16 von der Arbeitsstange 6 und einem Stößel 110 umschlossen.

Die Gasdruckfeder 50 umfasst ein an dem Arbeitskolben 2 befestigtes und in dem Arbeitszylinder 1 entlang der Hubachse H verschieblich gelagertes Ausgleichsgefäß 120 mit einem Innenraum 121. Der Ausgleichskolben 10 teilt den Innenraum 121 in einen mit dem Arbeitsraum 1a für das Arbeitsmedium 1M leitend verbundenen inneren Arbeitsraum 122 und einen gegenüber dem Arbeitsraum 1a abgedichteten Rückstellraum 15. Der Ausgleichskolben umfass dazu eine umlaufende Dichtung 11, z. B. einen O-Ring.

Zur Verbindung des Arbeitsraums 1a und des inneren Arbeitsraums 122 ist z.B. in einem das Ausgleichsgefäß 120 mit der Arbeitsstange 6 verbindenden Verbindungselement 123 eine Bohrung 124 vorgesehen. Das Arbeitsmedium 1M kann vorzugsweise zwischen dem Ausgleichsgefäß 120 und dem Arbeitszylinder 1 hindurchströmen (z.B. durch einen zur Hubachse H radialen Abstand zwischen Ausgleichsgefäß 120 und Arbeitszylinder 1 oder durch mindestens eine Längsnut entlang der Hubachse H in einer Innenwand des Arbeitszylinders 1 oder einer Außenwand des Ausgleichsgefäßes 120).

Die Arbeitsstange 6 umfasst den Stößel 110, der durch den Druck des Ausgleichsmediums 16M aus der Arbeitsstange 6 austreibbar ist. Der Stößel 110 beaufschlagt den Ausgleichskolben 10 mit Druck des Ausgleichsmediums 16M in einem das Volumen des inneren Arbeitsraums 122 vergrößernden Sinne.

Das Heraustreiben des Stößels 110 aus der Arbeitsstange 6 bei einer Temperaturerhöhung führt dann zu einer Verschiebung des Ausgleichskolbens 10 relativ zum Ausgleichsgefäß 120 entlang der Hubachse H (in der Zeichnung nach oben). Dadurch vergrößert sich der innere Arbeitsraum 122 und somit der gesamte dem Arbeitsraum 1M zur Verfügung stehende Arbeitsraum 1a. Figur 2 zeigt im Verhältnis zu Figur 1 einen Zustand bei niedrigerer Temperatur und weiter in die Arbeitsstange 6 eingefahrenem Stößel 110.

Das Ausgleichsmedium 16M ist beispielsweise ein Dehnstoff, bevorzugt ein Dehnwachs, das insbesondere in einem gesamten Arbeitstemperaturbereich der Gasdruckfeder 50 zumindest eine flüssige Phase und zumindest eine feste Phase umfasst.

Die Gasdruckfeder 50 umfasst ein in dem Rückstellraum 15 angeordnetes Rückstellmedium 15M, wobei der Ausgleichskolben 10 von dem Rückstellmedium 15M in einem das Volumen des Arbeitsraums 1a, bevorzugt des inneren Arbeitsraums 122, verkleinernden Sinne beaufschlagt ist. Dadurch kann möglichst einfach sichergestellt werden, dass sich bei einem Zusammenziehen des Ausgleichsmediums 16M bei sinkender Temperatur (Fig. 1 -> Fig. 2) auch der Ausgleichskolben 10 wieder in die Ursprungslage zurückbewegt, also ein reversibler Betrieb sichergestellt ist. Mit der Volumenreduktion des Ausgleichsmediums 16M wird dann durch das Rückstellmedium 15M für eine entsprechende Volumenreduktion des Ausgleichsraums 16 gesorgt. Zur Unterstützung des Rückstellmediums 15M kann die Gasdruckfeder 50 zusätzlich auch eine Rückstellfeder im Rückstellraum 15 aufweisen (in der dargestellten Ausführungsform nicht gezeigt).

Erfindungsgemäß ist das Rückstellmedium 15M das gasförmige Arbeitsmedium 1M. Dies vereinfacht die Herstellung der Gasdruckfeder 50, da nur ein Medium bzw. Gas verwendet wird.

Das Arbeitsmedium 1M ist also in Fig. 1 im Vergleich zur Situation von Fig. 2 in einem größeren Arbeitsraum 1a (insbesondere größerem inneren Arbeitsraum 122) bei gleicher Position des Arbeitskolbens 2 angeordnet. Somit kann die temperaturbedingte Druckerhöhung des Arbeitsmediums 1M durch die Erhöhung des Volumens des inneren Arbeitsraums 122 teilweise oder sogar vollständig kompensiert werden. Somit wird stellt die Gasdruckfeder 50 eine deutlich weniger temperaturabhängige Federkraft zur Verfügung als im Stand der Technik.

### Liste der Bezugszeichen

- 1: Arbeitszylinder
- 1a: Arbeitsraum
- 1M: Arbeitsmedium
- 2: Arbeitskolben
- 4: Dichtung
- 10: Ausgleichskolben
- 11: Dichtung
- 15: Rückstellraum
- 15M: Rückstellmedium
- 16: Ausgleichsraum
- 16M: Ausgleichsmedium
- 50: Gasdruckfeder
- 110: Stößel
- 120: Ausgleichsgefäß
- 121: Innenraum
- 122: Innerer Arbeitsraum
- 123: Verbindungselement
- 124: Bohrung
- H: Hubachse

## Patentansprüche

1. Gasdruckfeder (50), umfassend
a) einen Arbeitszylinder (1), der zusammen mit einem gegenüber dem Arbeitszylinder (1) verschieblich gelagerten Ausgleichskolben (10) einen mit einem gasförmigen Arbeitsmedium (1M) gefüllten Arbeitsraum (1a) umschließt,
b) eine Arbeitsstange (6), die durch eine Öffnung des Arbeitszylinders (1) entlang einer Hubachse (H) verschiebbar gelagert in den Arbeitsraum (1a) hineinragt,
c) einen an der Arbeitsstange (6) befestigten und in dem Arbeitsraum (1a) entlang der Hubachse (H) verschieblich gelagerten Arbeitskolben (2),
d) ein in einem Ausgleichsraum (16) angeordnetes, sich bei Temperaturerhöhung ausdehnendes Ausgleichsmedium (16M),
e) wobei der Ausgleichskolben (10) von dem Druck des Arbeitsmediums (1M) und dem Druck des Ausgleichsmediums (16M) in einem das Volumen des Arbeitsraums (1a) vergrößernden Sinne beaufschlagt ist, **dadurch gekennzeichnet, dass**
f) der Ausgleichsraum (16) zumindest teilweise von der Arbeitsstange (6) umschlossen ist,
g) wobei die Gasdruckfeder (50) ein an dem Arbeitskolben (2) befestigtes und in dem Arbeitszylinder (1) entlang der Hubachse (H) verschieblich gelagertes Ausgleichsgefäß (120) mit einem Innenraum (121) umfasst,
h) wobei der Ausgleichskolben (10) den Innenraum (121) in einen mit dem Arbeitsraum (1a) für das Arbeitsmedium (1M) leitend verbundenen inneren Arbeitsraum (122) und einen gegenüber dem Arbeitsraum (1a) abgedichteten Rückstellraum (15) teilt.
i) wobei die Gasdruckfeder (50) ein in dem Rückstellraum (15) angeordnetes Rückstellmedium (15M) umfasst,
j) wobei der Ausgleichskolben (10) von dem Rückstellmedium (15M) in einem das Volumen des inneren Arbeitsraums (122) verkleinernden Sinne beaufschlagt ist,
k) wobei das Rückstellmedium (15M) das gasförmige Arbeitsmedium (1M) ist,
l) wobei die Gasdruckfeder (50) ein Rückschlagventil zwischen Arbeitsraum (1a) und Rückstellraum (15) zum gleichzeitigen Befüllen des Arbeitsraums (1a) und des Rückstellraums (15) mit dem Arbeitsmedium (1M) umfasst.

2. Gasdruckfeder (50) nach Anspruch 1,
**dadurch gekennzeichnet, dass**
a) die Arbeitsstange (6) einen durch den Druck des Ausgleichsmediums (16M) aus der Arbeitsstange (6) austreibbaren Stößel (110) umfasst,
und
b) der Stößel (110) den Ausgleichskolben (10) mit Druck des Ausgleichsmediums (16M) in einem das Volumen des inneren Arbeitsraums (122) vergrößernden Sinne beaufschlagt.

3. Verfahren zur Herstellung einer Gasdruckfeder (50) nach einem der
Ansprüche 1 bis 2,
**gekennzeichnet durch folgende Schritte:**
a) Bereitstellen des Arbeitszylinders (1) für die Gasdruckfeder (50),
b) Bereitstellen der Arbeitsstange (6) mit einem Ausgleichsraum (16) für die Gasdruckfeder (50),
c) Einfüllen des Ausgleichsmediums (16M) in Ausgleichsraum (16),
d) Einbauen der Arbeitsstange (6) in den Arbeitszylinder (1),
e) gleichzeitiges Befüllen des Arbeitsraums (1a) und des Rückstellraums (15) der Gasdruckfeder (50) über das Rückschlagventil der Gasdruckfeder (50) zwischen Arbeitsraum (1a) und Rückstellraum (15) mit dem gasförmigen Arbeitsmedium (1M) und
f) Ablassen eines Teils des Arbeitsmediums (1M) aus dem Arbeitsraum (1a) nach dem Befüllen.

4. Verfahren nach Anspruch 3,
**gekennzeichnet durch folgende Schritte:**
Befestigen des Stößels (110) und/oder des Ausgleichsgefäßes (120) an der Arbeitsstange (6) vor dem Einbauen.

5. Antriebssystem für eine Klappe mit
a) einer Gasdruckfeder (50) nach einem der Ansprüche 1 bis 2 zur Unterstützung der Klappe und
b) einem elektromechanischen Antrieb, bevorzugt einem Spindelantrieb, zum Antrieb der Klappe.

## Claims

1. A gas pressure spring (50) comprising
a) a working cylinder (1) which, together with a compensating piston (10) mounted so that it is slidable relative to the working cylinder (1), encloses a working chamber (1a) filled with a gaseous working medium (1M),
b) a working rod (6) protruding into the working chamber (1a) through an opening of the working cylinder (1) and mounted so that it is slidable along a stroke axis (H) and,
c) a working piston (2) fastened to the working rod (6) and mounted in the working chamber (1a) so that it is slidable along the stroke axis (H),
d) a compensating medium (16M) disposed in a compensating chamber (16) and expanding in the event of a temperature increase,
e) wherein the compensating piston (10) is acted upon by the pressure of the working medium (1M) and the pressure of the compensating medium (16M) such that the volume of the working chamber (1a) is increased, **characterised in that**
f) the compensating chamber (16) is at least partially surrounded by the working rod (6),
g) wherein the gas pressure spring (50) comprises a compensating container (120) having an inner chamber (121), the compensating container (120) being fastened to the working piston (2) and mounted in the working cylinder (1) so that it is slidable along the stroke axis (H),
h) wherein the compensating piston (10) divides the inner chamber (121) into an inner working chamber (122) conductively connected to the working chamber (1a) for the working medium (1M) and a return chamber (15) sealed with regard to the working chamber (1a),
i) wherein the gas pressure spring (50) comprises a return medium (15M) disposed in the return chamber (15),
j) wherein the compensating piston (10) is acted upon by the return medium (15M) such that the volume of the inner working chamber (122) is reduced,
k) wherein the return medium (15M) is the gaseous working medium (1M),
l) wherein the gas pressure spring (50) comprises a check valve between the working chamber (1a) and the return chamber (15) for simultaneously filling the working chamber (1a) and the return chamber (15) with the working medium (1M).

2. The gas pressure spring (50) according to claim 1,
**characterised in that**
a) the working rod (6) comprises a tappet (110) which can be driven out of the working rod (6) by the pressure of the compensating medium (16M), and
b) the tappet (110) applies the pressure of the compensating medium (16M) to the compensating piston (10) such that the volume of the inner working chamber (122) is increased.

3. A method for producing a gas pressure spring (50) according to one of the claims 1 to 2,
**characterised by the following steps:**
a) providing the working cylinder (1) for the gas pressure spring (50),
b) providing the working rod (6) having a compensating chamber (16) for the gas pressure spring (50),
c) filling the compensating medium (16M) into the compensating chamber (16),
d) mounting the working rod (6) in the working cylinder (1),
e) simultaneously filling the working chamber (1a) and the return chamber (15) of the gas pressure spring (50) through the check valve of the gas pressure spring (50) between the working chamber (1a) and the return chamber (15) with the gaseous working medium (1M), and
f) discharging part of the working medium (1M) from the working chamber (1a) after filling.

4. The method according to claim 3,
**characterised by the following steps:**
fastening the tappet (110) and/or the compensating container (120) to the working rod (6) prior to mounting.

5. A drive system for a flap including
a) a gas pressure spring (50) according to one of the claims 1 to 2 for supporting the flap, and
b) an electromechanical drive, preferably a spindle drive, for driving the flap.

## Revendications

1. Ressort à gaz (50), comprenant
a) un cylindre de travail (1) qui, avec un piston de compensation (10) monté coulissant par rapport au cylindre de travail (1), entoure une chambre de travail (1a) remplie d'un fluide de travail gazeux (1M),
b) une tige de travail (6) qui pénètre dans la chambre de travail (1a) à travers une ouverture du cylindre de travail (1), en étant montée coulissante le long d'un axe de course (H),
c) un piston de travail (2) fixé à la tige de travail (6) et logé dans la chambre de travail (1a) de manière à pouvoir se déplacer le long de l'axe de course (H),
d) un fluide de compensation (16M) disposé dans une chambre de compensation (16) et se dilatant en cas d'augmentation de la température,
e) le piston de compensation (10) étant sollicité par la pression du fluide de travail (1M) et la pression du fluide de compensation (16M) dans un sens augmentant le volume de la chambre de travail (1a),
**caractérisé en ce que**
f) la chambre de compensation (16) est au moins partiellement entourée par la tige de travail (6),
g) le ressort à gaz (50) comprenant un récipient de compensation (120) avec une chambre intérieur (121), le récipient de compensation (120) étant fixé sur le piston de travail (2) et logé dans le cylindre de travail (1) de manière à pouvoir se déplacer le long de l'axe de course (H),
h) le piston de compensation (10) divisant la chambre intérieur (121) en une chambre de travail intérieur (122) relié de manière conductrice pour le fluide de travail (1M) à la chambre de travail (1a) et en une chambre de rappel (15) étanchéifié par rapport à la chambre de travail (1a).
i) le ressort à gaz (50) comprenant un fluide de rappel (15M) disposé dans la chambre de rappel (15),
j) le piston de compensation (10) étant sollicité par le fluide de rappel (15M) dans un sens réduisant le volume de la chambre de travail intérieur (122),
k) le fluide de rappel (15M) étant le fluide de travail gazeux (1M),
l) le ressort à gaz (50) comprenant un clapet anti-retour entre la chambre de travail (1a) et la chambre de rappel (15) pour remplir simultanément la chambre de travail (1a) et la chambre de rappel (15) avec le fluide de travail (1M).

2. Ressort à gaz (50) selon la revendication 1,
**caractérisé en ce que**
a) la tige de travail (6) comprend un poussoir (110) pouvant être expulsé de la tige de travail (6) par la pression du fluide de compensation (16M),
et
b) le poussoir (110) sollicite le piston de compensation (10) avec la pression du fluide de compensation (16M) dans un sens augmentant le volume de la chambre de travail intérieure (122).

3. Procédé de fabrication d'un ressort à gaz (50) selon l'une des revendications 1 à 2,
**caractérisé par les étapes suivantes :**
a) mise à disposition du cylindre de travail (1) pour le ressort à gaz (50),
b) mise à disposition de la tige de travail (6) avec une chambre de compensation (16) pour le ressort à gaz (50),
c) remplissage du fluide de compensation (16M) dans la chambre de compensation (16),
d) montage de la tige de travail (6) dans le cylindre de travail (1),
e) remplissage simultané de la chambre de travail (1a) et de la chambre de rappel (15) du ressort à gaz (50) par le biais du clapet anti-retour du ressort à gaz (50) entre la chambre de travail (1a) et la chambre de rappel (15) avec le fluide de travail gazeux (1M) et
f) évacuation d'une partie du fluide de travail (1M) de la chambre de travail (1a) après le remplissage .

4. Procédé selon la revendication 3,
**caractérisé par les étapes suivantes :**
fixation du poussoir (110) et/ou du récipient de compensation (120) sur la tige de travail (6) avant le montage.

5. Système d'entraînement pour un volet comprenant
a) un ressort à gaz (50) selon l'une des revendications 1 à 2 pour soutenir le volet et
b) un entraînement électromécanique, de préférence un entraînement à vis, pour entraîner le volet.
